# EUROPEAN PATENT APPLICATION

(11) **EP 4 625 906 A1**
(43) Date of publication of application: **01.10.2025**
(21) Application number: 22966693.8
(22) Date of filing: 28.11.2022
(51) Int. Cl.: H04L 27/00, H04W 28/22

(54) **TRANSMISSION RATE NEGOTIATION METHOD, COMMUNICATION DEVICE, AND COMMUNICATION SYSTEM**

(71) Applicant: Huawei Technologies Co., Ltd., Shenzhen, Guangdong 518129 (CN)
(72) Inventor: WU, Xiaochuan, Shenzhen, Guangdong 518129 (CN); MA, Ning, Shenzhen, Guangdong 518129 (CN)
(74) Representative: Gill Jennings & Every LLP
(86) International application number: PCT/CN2022/134667
(87) International publication number: WO 2024/113088

(57) **Abstract**

Embodiments of this application provide a transmission rate negotiation method, a communication apparatus, and a communication system. In this solution, a first apparatus indicates, based on a cyclic sequence, a first transmission rate supported by the first apparatus, and a second apparatus can accurately determine the first transmission rate, to help improve accuracy of transmission rate negotiation. In addition, after receiving a first cyclic sequence, the second apparatus does not need to send a response to the first apparatus, but performs a subsequent operation, for example, determines the first transmission rate based on the first cyclic sequence. Because fewer interaction procedures are performed between the two parties, the transmission rate negotiation is accelerated.

## Description

### TECHNICAL FIELD

Embodiments of this application relate to the field of wireless communication technologies, and in particular, to a transmission rate negotiation method, a communication apparatus, and a communication system.

### BACKGROUND

In some application scenarios, auto-negotiation of a transmission rate used for communication needs to be performed between two apparatuses before link establishment, and a link can be successfully established for normal communication only after the transmission rate negotiation succeeds.

How to implement fast and accurate transmission rate negotiation between two apparatuses has always been a concern in the industry, but there is no effective solution yet.

### SUMMARY

Embodiments of this application provide a transmission rate negotiation method, a communication apparatus, and a communication system, to implement fast and accurate transmission rate negotiation between two apparatuses.

According to a first aspect, an embodiment of this application provides a transmission rate negotiation method. The method may be performed by a second apparatus or a module (for example, a chip) in the second apparatus. An example in which the second apparatus performs the method is used. The method includes: The second apparatus receives a first cyclic sequence from a first apparatus, where a first cyclic class corresponding to the first cyclic sequence indicates a first transmission rate in transmission rates supported by the first apparatus, the first cyclic class includes at least one first subsequence, the first subsequence includes any M consecutive bits in the first cyclic sequence, and M is an integer greater than 1; the second apparatus determines the first transmission rate based on the first cyclic sequence; the second apparatus determines a to-be-negotiated transmission rate based on the first transmission rate and transmission rates supported by the second apparatus; and the second apparatus attempts to establish a link with the first apparatus based on the to-be-negotiated transmission rate.

In the foregoing solution, the first apparatus indicates, based on the cyclic sequence, the first transmission rate supported by the first apparatus, so that the second apparatus can accurately determine the first transmission rate, to help improve accuracy of transmission rate negotiation. In addition, after receiving the first cyclic sequence, the second apparatus does not need to send a response to the first apparatus, but performs a subsequent operation, for example, determines the first transmission rate based on the first cyclic sequence. Because fewer interaction procedures are performed between the two parties, the transmission rate negotiation is accelerated.

In a possible implementation method, that the second apparatus determines the first transmission rate based on the first cyclic sequence includes: The second apparatus obtains any M bits in the first cyclic sequence; and the second apparatus determines the first transmission rate based on the first cyclic class to which the M bits belong.

In the foregoing solution, a method for indicating the transmission rate based on the cyclic sequence has the following advantages: The second apparatus may intercept M symbols from any position of the received cyclic sequence, so that the second apparatus may accurately determine the transmission rate indicated by the cyclic sequence. Therefore, the first apparatus does not need to indicate, by using additional signaling, the second apparatus to intercept from a specific position of the cyclic sequence, and synchronization between the first apparatus and the second apparatus in advance does not need to be ensured, that is, the first apparatus does not need to send a synchronization header or a preamble to the second apparatus in advance. Therefore, the method has advantages of high correctness, high efficiency, and less signaling.

In a possible implementation method, the first transmission rate is a largest transmission rate in the transmission rates supported by the first apparatus; and that the second apparatus determines a to-be-negotiated transmission rate based on the first transmission rate and transmission rates supported by the second apparatus includes: When the transmission rates supported by the second apparatus include the first transmission rate, the second apparatus determines the first transmission rate as the to-be-negotiated transmission rate; or when the transmission rates supported by the second apparatus do not include the first transmission rate, the second apparatus determines, as the to-be-negotiated transmission rate, a largest transmission rate in the transmission rates supported by the second apparatus.

In the foregoing solution, when the transmission rates supported by the second apparatus include the first transmission rate, the second apparatus determines the first transmission rate as the to-be-negotiated transmission rate. This can ensure that the first apparatus and the second apparatus quickly determine a same transmission rate as the to-be-negotiated transmission rate, and helps accelerate successful negotiation. When the transmission rates supported by the second apparatus do not include the first transmission rate, the second apparatus determines, as the to-be-negotiated transmission rate, the largest transmission rate in the transmission rates supported by the second apparatus. This helps ensure that the first apparatus and the second apparatus select a largest transmission rate supported by both the first apparatus and the second apparatus as the to-be-negotiated transmission rate, and helps improve communication efficiency.

In a possible implementation method, that the second apparatus receives a first cyclic sequence from a first apparatus includes: The second apparatus receives level signals from the first apparatus, where the level signals indicate the first cyclic sequence, where a first-type level signal that lasts for first duration and a second-type level signal that lasts for second duration in the level signals indicate first information, and a first-type level signal that lasts for third duration and a second-type level signal that lasts for fourth duration in the level signals indicate second information; and the first information is different from the second information, and the first duration is different from the third duration.

In the foregoing solution, the first cyclic sequence is indicated by using level signals of different types. This helps improve accuracy of parsing the first cyclic sequence by the second apparatus, and further helps increase the speed of the transmission rate negotiation and a success rate of the transmission rate negotiation.

In a possible implementation method, that the second apparatus attempts to establish a link with the first apparatus based on the to-be-negotiated transmission rate includes: When the second apparatus successfully establishes the link with the first apparatus based on the to-be-negotiated transmission rate, the second apparatus determines the to-be-negotiated transmission rate as a transmission rate between the second apparatus and the first apparatus.

In a possible implementation method, when the second apparatus fails to establish the link with the first apparatus based on the to-be-negotiated transmission rate, the second apparatus deletes the to-be-negotiated transmission rate from the transmission rates supported by the second apparatus.

In the foregoing solution, the to-be-negotiated transmission rate based on which the link fails to be established is deleted, to obtain updated transmission rates supported by the second apparatus, so that the second apparatus re-determines the to-be-negotiated transmission rate based on the updated transmission rates supported by the second apparatus, to help correctly complete the transmission rate negotiation.

In a possible implementation method, that the second apparatus attempts to establish a link with the first apparatus based on the to-be-negotiated transmission rate includes: When the second apparatus fails to establish the link with the first apparatus based on the to-be-negotiated transmission rate, after specified duration, the second apparatus re-attempts to establish a link with the first apparatus based on the to-be-negotiated transmission rate.

In the foregoing solution, the second apparatus has a higher probability of successfully establishing the link based on the to-be-negotiated transmission rate, to increase the success rate of the transmission rate negotiation and the speed of the transmission rate negotiation.

In a possible implementation method, the second apparatus sends a second cyclic sequence to the first apparatus, where a second cyclic class corresponding to the second cyclic sequence indicates a second transmission rate in the transmission rates supported by the second apparatus, the second cyclic class includes at least one second subsequence, and the second subsequence includes any M consecutive bits in the second cyclic sequence.

In a possible implementation method, the second transmission rate is the largest transmission rate in the transmission rates supported by the second apparatus.

In a possible implementation method, the first apparatus is a baseband unit (baseband unit, BBU), an adaptive antenna unit (active antenna unit, AAU), or a remote radio unit (radio remote unit, RRU), and the second apparatus is a BBU, an AAU, or an RRU.

In the foregoing solution, transmission rate negotiation between optical transmission devices such as a BBU, an AAU, or an RRU can be implemented, to help improve communication efficiency of the optical transmission devices.

According to a second aspect, an embodiment of this application provides a communication apparatus. The apparatus may be a second apparatus or a module (for example, a chip) in the second apparatus. The apparatus has a function of implementing any one of implementation methods in the first aspect. The function may be implemented by hardware, or may be implemented by hardware executing corresponding software. The hardware or the software includes one or more modules corresponding to the function.

According to a third aspect, an embodiment of this application provides a communication apparatus, including a processor and a memory. The memory is configured to store computer instructions. When the apparatus runs, the processor executes the computer instructions stored in the memory, to cause the apparatus to perform any one of implementation methods in the first aspect.

According to a fourth aspect, an embodiment of this application provides a communication apparatus, including a unit or a means (means) configured to perform or for performing steps of any one of implementation methods in the first aspect.

According to a fifth aspect, an embodiment of this application provides a communication apparatus, including a processor and an interface circuit. The processor is configured to communicate with another apparatus through the interface circuit, and perform any one of implementation methods in the first aspect. There are one or more processors.

According to a sixth aspect, an embodiment of this application provides a communication apparatus, including a processor coupled to a memory. The processor is configured to invoke a program stored in the memory, to perform any one of implementation methods in the first aspect. The memory may be located inside or outside the apparatus. In addition, there may be one or more processors.

According to a seventh aspect, an embodiment of this application further provides a computer-readable storage medium. The computer-readable storage medium stores instructions. When the instructions are run on a communication apparatus, any one of implementation methods in the first aspect is caused to be performed.

According to an eighth aspect, an embodiment of this application further provides a computer program product. The computer program product includes a computer program or instructions. When the computer program or the instructions are run by a communication apparatus, any one of implementation methods in the first aspect is caused to be performed.

According to a ninth aspect, an embodiment of this application further provides a chip system, including a processor configured to perform any one of implementation methods in the first aspect.

According to a tenth aspect, an embodiment of this application further provides a communication system, including a second apparatus configured to perform any one of implementation methods in the first aspect, and a first apparatus configured to send a first cyclic sequence to the second apparatus.

### BRIEF DESCRIPTION OF DRAWINGS

FIG. 1(a) is a diagram of a possible and non-limiting system;
FIG. 1(b) is a diagram of an access network device;
FIG. 1(c) is a diagram of a communication system according to an embodiment of this application;
FIG. 2 is a diagram of a transmission rate negotiation method according to an embodiment of this application;
FIG. 3 is a diagram of indicating information by using level signals according to an embodiment of this application;
FIG. 4A and FIG. 4B are a diagram of transmission of a cyclic sequence according to an embodiment of this application;
FIG. 5 is a diagram of a communication apparatus according to an embodiment of this application; and
FIG. 6 is a diagram of a communication apparatus according to an embodiment of this application.

### DESCRIPTION OF EMBODIMENTS

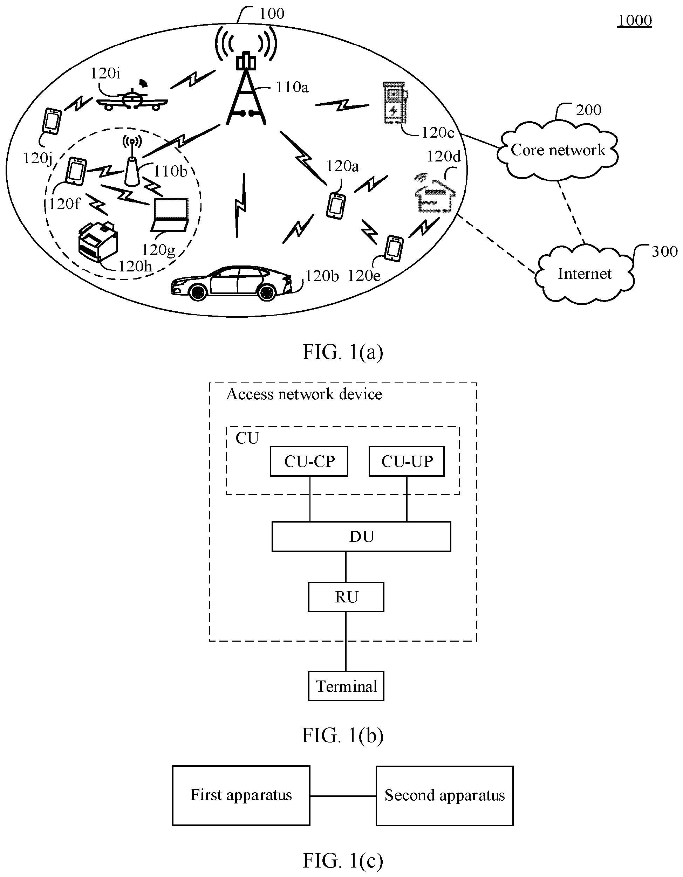

FIG. 1(a) is a diagram of a possible and non-limiting communication system. As shown in FIG. 1(a), the communication system 1000 includes a radio access network (radio access network, RAN) 100 and a core network (core network, CN) 200. The RAN 100 includes at least one RAN node (for example, 110a and 110b in FIG. 1(a), which are collectively referred to as 110) and at least one terminal (for example, 120a to 120j in FIG. 1(a), which are collectively referred to as 120). The RAN 100 may further include another RAN node, such as a wireless relay device and/or a wireless backhaul device (not shown in FIG. 1(a)). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to a 3rd generation partnership project (3rd generation partnership project, 3GPP), such as a 4th generation (4th generation, 4G) mobile communication system, a 5th generation (5th generation, 5G) mobile communication system, or a future-oriented evolved system (for example, a sixth generation (6th generation, 6G) mobile communication system). The RAN 100 may alternatively be an open access network (open RAN, O-RAN, or ORAN) or a wireless fidelity (wireless fidelity, Wi-Fi) system. The RAN 100 may alternatively be a communication system that integrates the foregoing two or more systems.

The RAN node 110 may sometimes also be referred to as an access network device, a RAN entity, an access node, or the like, and forms a part of the communication system, to help a terminal in implementing wireless access. A plurality of RAN nodes 110 in the communication system 1000 may be nodes of a same type, or may be nodes of different types. In some scenarios, roles of the RAN node 110 and the terminal 120 are opposite. For example, a network element 120i in FIG. 1(a) may be a helicopter or an unmanned aerial vehicle, and the network element may be configured as a mobile base station. For the terminal 120j that accesses the RAN 100 via the network element 120i, the network element 120i is a base station. However, for the base station 110a, the network element 120i is a terminal. Both the RAN node 110 and the terminal 120 are sometimes referred to as communication apparatuses. For example, network elements 110a and 110b in FIG. 1(a) may be understood as communication apparatuses having a base station function, and network elements 120a to 120j may be understood as communication apparatuses having a terminal function.

In a possible scenario, the RAN node may be a base station (base station), an evolved NodeB (evolved NodeB, eNodeB), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1(a)), a micro base station or an indoor station (for example, 110b in FIG. 1(a)), a relay node or a donor node, or a radio controller in a cloud radio access network (cloud radio access network, CRAN) scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, the plurality of RAN nodes coordinate to assist the terminal in implementing the wireless access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, included in a baseband unit (baseband unit, BBU). The RU may be included in a radio frequency device or a radio frequency unit, for example, included in a remote radio unit (remote radio unit, RRU) or an active antenna unit (active antenna unit, AAU).

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP and the CU-UP), the DU, and the RU in this application may be implemented by using a software module, a hardware module, or a combination of a software module and a hardware module.

FIG. 1(b) is a diagram of an access network device. As shown in FIG. 1(b), the access network device includes one or more CUs, one or more DUs, and one or more radio units (radio units, RUs). For clarity, FIG. 1(b) shows only one CU, one DU, and one RU. The CU is configured to be connected to a core network and one or more DUs. Optionally, the CU may have a part of functions of the core network. The CU may include a CU-CP and a CU-UP.

The CU and the DU may be configured based on protocol layer functions of wireless networks implemented by the CU and the DU. For example, the CU is configured to implement functions of a packet data convergence protocol (packet data convergence protocol, PDCP) layer and functions of a protocol layer above the packet data convergence protocol layer (for example, a radio resource control (radio resource control, RRC) layer and/or a service data adaptation protocol (service data adaptation protocol, SDAP) layer); and the DU is configured to implement functions of a protocol layer below the PDCP layer (for example, a radio link control (radio link control, RLC) layer, a medium access control (medium access control, MAC) layer, and/or a physical (PHY) layer). For another example, the CU is configured to implement functions of a protocol layer above a PDCP layer (for example, an RRC layer and/or an SDAP layer); and the DU is configured to implement functions of the PDCP layer and functions of a protocol layer below the PDCP layer (for example, an RLC layer, a MAC layer, and/or a PHY layer).

The foregoing configuration of the CU or the DU is merely an example, and functions of the CU or the DU may also be configured based on a requirement. For example, the CU or the DU may be configured to have functions of more protocol layers; or the CU or the DU may be configured to have a part of processing functions of protocol layers. For example, a part of functions of the RLC layer and functions of a protocol layer above the RLC layer are set on the CU; and remaining functions of the RLC layer and functions of a protocol layer below the RLC layer are set on the DU. For another example, the functions of the CU or the DU may be divided based on a service type or another system requirement, for example, divided based on a delay. A function whose processing time needs to satisfy a small delay requirement is set on the DU, and a function whose processing time does not need to satisfy the delay requirement is set on the CU.

The DU and the RU may work together to implement functions of the PHY layer. One DU may be connected to one or more RUs. Functions of the DU and the RU may be configured in a plurality of manners based on a design. For example, the DU is configured to implement a baseband function; and the RU is configured to implement an intermediate radio frequency function. For another example, the DU is configured to implement a higher-layer function of the PHY layer; and the RU is configured to implement a lower-layer function of the PHY layer or implement the lower-layer function and a radio frequency function. The higher-layer function of the physical layer may include a part of functions of the physical layer, and the part of functions is closer to the MAC layer. The lower-layer function of the physical layer may include another part of functions of the physical layer, and the part of functions is closer to an intermediate radio frequency side.

FIG. 1(c) is a diagram of a communication system according to an embodiment of this application. The communication system includes a first apparatus and a second apparatus. Specific forms of the first apparatus and the second apparatus are not limited in embodiments of this application.

For example, the first apparatus is any one of a CU, a DU, an RU, an RRU, a BBU, an AAU, or a terminal, and the second apparatus is any one of a CU, a DU, an RU, an RRU, a BBU, an AAU, or a terminal. In addition, the first apparatus and the second apparatus are two different apparatuses.

For example, when the first apparatus communicates with the second apparatus by using an optical fiber, an interface between the first apparatus and the second apparatus may be a common public radio interface (common public radio interface, CPRI), an enhanced common public radio interface (enhanced CPRI, eCPRI), a fronthaul interface, or the like.

For example, when the first apparatus communicates with the second apparatus in a wireless manner, an interface between the first apparatus and the second apparatus may be a 4G air interface, a 5G air interface, a 6G air interface, or the like.

In existing communication, in some application scenarios, auto-negotiation of a transmission rate used for communication needs to be performed between two apparatuses before link establishment, and a link can be successfully established for normal communication. An existing transmission rate negotiation method is generally as follows: The first apparatus and the second apparatus respectively poll, based on a specific periodicity, transmission rates supported by the first apparatus and transmission rates supported by the second apparatus. If there is a same transmission rate matched between the two ends, this indicates that the transmission rate negotiation succeeds. Therefore, the link can be successfully established. For example, the transmission rates supported by the first apparatus include {5, 10, 15, 20}, and the transmission rates supported by the second apparatus include {10, 15, 20}. For example, the first apparatus switches transmission rates every four seconds in ascending order of the transmission rates; and the second apparatus switches transmission rates every one second in ascending order of the transmission rates. At a specific moment, if the first apparatus and the second apparatus select a same transmission rate, the first apparatus and the second apparatus can successfully establish the link. Although the method can complete the transmission rate negotiation, a negotiation speed is unstable due to high randomness. Sometimes it takes a long time to perform successful negotiation, or the negotiation still fails even a long period of time has been taken, resulting in low efficiency.

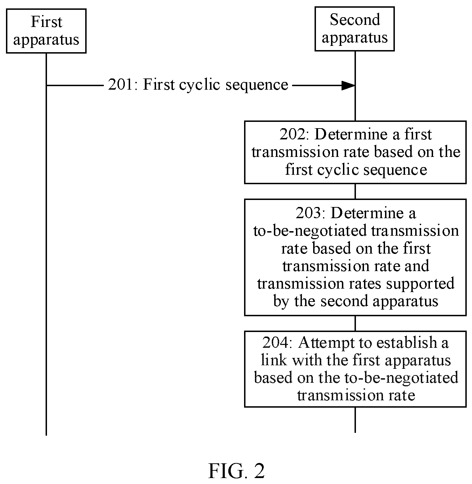

FIG. 2 is a schematic flowchart of a transmission rate negotiation method according to an embodiment of this application. The method is applicable to a case in which a link between a first apparatus and a second apparatus is different, and the method is enabled for automatic transmission rate negotiation.

The method includes the following steps.

Step 201: The first apparatus sends a first cyclic sequence to the second apparatus. Correspondingly, the second apparatus receives the first cyclic sequence.

In this embodiment of this application, the first cyclic sequence is a sequence constituted by a string of symbols, and a subsequence constituted by any M consecutive symbols in the sequence corresponds to a same transmission rate, that is, the sequence has a feature of time translation invariance (time translation invariance, TTI). A value of M is predefined or is negotiated between the first apparatus and the second apparatus, and M is an integer greater than 1.

The first cyclic sequence may also be referred to as a TTI sequence or a TTI information element.

For example, in this application, information is encoded and decoded by using cyclic classes (cyclic classes) and symbols (symbol). Different cyclic classes include different subsequences. One cyclic class includes one or more subsequences, and the cyclic class also satisfies the following conditions:

Condition 1: A specific subsequence in one cyclic class may be obtained by translating another subsequence in the cyclic class.

Condition 2: Different subsequences in different cyclic classes cannot be obtained from each other through translation.

In other words, a subsequence obtained by translating the subsequence in the cyclic class for any quantity of times still belongs to the cyclic class, and does not belong to another cyclic class.

The following is described with reference to an example. For example, one symbol indicates 1-bit information (namely, 0 or 1), M=4, and the following six cyclic classes may be obtained:
class 1 {0000};
class 2 {0001, 0010, 0100, 1000};
class 3 {0011, 0110, 1100, 1001};
class 4 {0101, 1010};
class 5 {0111, 1110, 1101}; and
class 6 {1111}.

The class 2 is used as an example. The class 2 includes four subsequences: 0001, 0010, 0100, and 1000. Any one of the four subsequences may be obtained by translating another subsequence in the four subsequences. For example, leftward translation is performed. For example, 0010 is obtained by translating 0001 leftward by one bit, 0100 is obtained by translating 0001 leftward by two bits, and 1000 is obtained by translating 0001 leftward by three bits. Alternatively, 0100 is obtained by translating 0010 leftward by one bit, 1000 is obtained by translating 0010 leftward by two bits, and 0001 is obtained by translating 0010 leftward by three bits. For example, rightward translation is performed. For example, 1000 is obtained by translating 0001 rightward by one bit, 0100 is obtained by translating 0001 rightward by two bits, and 0010 is obtained by translating 0001 rightward by three bits. Alternatively, 0001 is obtained by translating 0010 rightward by one bit, 1000 is obtained by translating 0010 rightward by two bits, and 0100 is obtained by translating 0010 rightward by three bits. Therefore, any two of the subsequences in the cyclic class 2 may be obtained from each other through translation.

The different subsequences in the different cyclic classes cannot be obtained from each other through translation. The class 2 and the class 3 are used as an example. The subsequence in the class 2 and a subsequence in the class 3 cannot be obtained from each other by using the foregoing translation method.

According to the foregoing method, when the first apparatus sends the first cyclic sequence to the second apparatus, the second apparatus may start intercepting four consecutive symbols from any position of the first cyclic sequence, so that the second apparatus may determine, based on the four symbols, a first cyclic class corresponding to the first cyclic sequence. The first cyclic class includes at least one first subsequence, and the first subsequence includes any M consecutive bits in the first cyclic sequence. If the first cyclic class is the class 2, the at least one first subsequence included in the first cyclic class is 0001, 0010, 0100, and 1000. If the first cyclic class is the class 3, the at least one first subsequence included in the first cyclic class is 0011, 0110, 1100, and 1001.

For example, if the first cyclic sequence is "···000100010001000100010001···", four consecutive symbols randomly intercepted by the second apparatus from the first cyclic sequence are 0001, 0010, 0100, or 1000. Regardless of whether the intercepted symbols are 0001, 0010, 0100, or 1000, the first cyclic class corresponding to the first cyclic sequence may be determined as the foregoing class 2 based on the four intercepted symbols.

For another example, if the first cyclic sequence is "···001100110011001100110011···", four consecutive symbols randomly intercepted by the second apparatus from the cyclic sequence are 0011, 0110, 1100, or 1001. Regardless of whether the intercepted symbols are 0011, 0110, 1100, or 1001, the first cyclic class corresponding to the first cyclic sequence may be determined as the foregoing class 3 based on the four intercepted symbols.

Step 202: The second apparatus determines a first transmission rate based on the first cyclic sequence, where the first transmission rate is a largest transmission rate, a smallest transmission rate, or another transmission rate in transmission rates supported by the first apparatus.

Both the first apparatus and the second apparatus learn of a predefined correspondence between the cyclic class and the transmission rate. Table 1 is an example of the correspondence between the cyclic class and the transmission rate.

A unit of the transmission rate is not limited in this embodiment of this application. In Table 1, a gigabit/second (GB/s) is used as an example.

**Table 1**

| Cyclic class (M=4) | Transmission rate (GB/s) |
|---|---|
| Class 1 | 5 |
| Class 2 | 10 |
| Class 3 | 15 |
| Class 4 | 20 |
| Class 5 | 25 |
| Class 6 | 30 |

It should be noted that, in an actual application, the class 1 and the class 6 may be reserved, that is, the transmission rate is not indicated by using the class 1 and the class 6.

When the first apparatus selects the first transmission rate in the transmission rates supported by the first apparatus as 10, the first apparatus determines, according to Table 1, that the first cyclic sequence sent to the second apparatus is a cyclic sequence corresponding to the class 2, namely, "···001100110011001100110011···". After receiving the first cyclic sequence, the second apparatus intercepts four consecutive symbols from any position to obtain a subsequence: 0011, 0110, 1100, or 1001. The second apparatus determines that the subsequence belongs to the class 2, and then determines, according to Table 1, that the first transmission rate indicated by the first cyclic sequence is 10.

The foregoing method for indicating the transmission rate based on the cyclic sequence has the following advantages: The second apparatus may intercept M symbols from any position of the received cyclic sequence, so that the second apparatus may accurately determine the transmission rate indicated by the cyclic sequence. Therefore, the first apparatus does not need to indicate, by using additional signaling, the second apparatus to intercept from a specific position of the cyclic sequence, and synchronization between the first apparatus and the second apparatus in advance does not need to be ensured, that is, the first apparatus does not need to send a synchronization header or a preamble to the second apparatus in advance. Therefore, the method has advantages of high correctness, high efficiency, and less signaling.

The foregoing uses M=4 as an example to describe a working principle of a cyclic sequence and a cyclic class. In an actual application, a value of M is not limited. For example, the value of M may depend on a total quantity of transmission rates supported by the first apparatus and the second apparatus. If the total quantity of supported transmission rates is large, M may be predefined as a large value, so that more transmission rates can be indicated.

For example, if one symbol indicates 1-bit information (namely, 0 or 1), and M=5, the following eight cyclic classes may be obtained:
class 1 {00000};
class 2 {00001, 00010, 00100, 01000, 10000};
class 3 {00011, 00110, 01100, 11000, 10001};
class 4 {00101, 01010, 10100, 01001, 10010};
class 5 {00111, 01110, 11100, 11001, 10011};
class 6 {01011, 10110, 01101, 11010, 10101};
class 7 {01111, 11110, 11101, 11011, 10111}; and
class 8 {11111}.

When M is another value, specific expression forms of the cyclic class are not described one by one.

The second apparatus obtains any M bits in the first cyclic sequence, and then determines the first transmission rate based on the first cyclic class to which a subsequence constituted by the M bits belongs.

In an actual application, a specific meaning of the first transmission rate may be agreed between the first apparatus and the second apparatus in advance. For example, the first apparatus and the second apparatus agree in advance that the first transmission rate is the largest transmission rate in the transmission rates supported by the first apparatus, or agree in advance that the first transmission rate is the smallest transmission rate in the transmission rates supported by the first apparatus.

Step 203: The second apparatus determines a to-be-negotiated transmission rate based on the first transmission rate and the transmission rates supported by the second apparatus.

The to-be-negotiated transmission rate herein may also be referred to as a candidate transmission rate or a to-be-confirmed transmission rate, and further confirmation about the to-be-negotiated transmission rate is made.

The following describes two different implementation methods for determining the to-be-negotiated transmission rate.

Implementation method 1: The first transmission rate is a smallest value in the transmission rates supported by the first apparatus.

When the transmission rates supported by the second apparatus include the first transmission rate, the second apparatus determines the first transmission rate as the to-be-negotiated transmission rate. For example, the transmission rates supported by the first apparatus are {5, 10, 15}, and the first transmission rate indicated by the first cyclic sequence sent by the first apparatus to the second apparatus is 5. If the transmission rates supported by the second apparatus are {5, 10, 15, 20}, and because there is an intersection between 5 and {5, 10, 15, 20}, the second apparatus determines, as the to-be-negotiated transmission rate, the transmission rate of 5 in the transmission rates supported by the second apparatus.

When the transmission rates supported by the second apparatus do not include the first transmission rate, the second apparatus determines, as the to-be-negotiated transmission rate, a smallest transmission rate in the transmission rates supported by the second apparatus. If the transmission rates supported by the second apparatus are {10, 15, 20}, and because there is no intersection between 5 and {10, 15, 20}, the second apparatus determines, as the to-be-negotiated transmission rate, the smallest transmission rate of 10 in the transmission rates supported by the second apparatus.

Implementation method 2: The first transmission rate is a largest value in the transmission rates supported by the first apparatus.

When the transmission rates supported by the second apparatus include the first transmission rate, the second apparatus determines the first transmission rate as the to-be-negotiated transmission rate. For example, the transmission rates supported by the first apparatus are {5, 10, 15}, and the first transmission rate indicated by the first cyclic sequence sent by the first apparatus to the second apparatus is 15. If the transmission rates supported by the second apparatus are {10, 15, 20}, and because there is an intersection between 15 and {10, 15, 20}, the second apparatus determines, as the to-be-negotiated transmission rate, the transmission rate of 15 in the transmission rates supported by the second apparatus.

When the transmission rates supported by the second apparatus do not include the first transmission rate, the second apparatus determines, as the to-be-negotiated transmission rate, a largest transmission rate in the transmission rates supported by the second apparatus. If the transmission rates supported by the second apparatus are {5, 10}, and because there is no intersection between 15 and {5, 10}, the second apparatus determines, as the to-be-negotiated transmission rate, the largest transmission rate of 10 in the transmission rates supported by the second apparatus.

Step 204: The second apparatus attempts to establish a link with the first apparatus based on the to-be-negotiated transmission rate.

Establishment of the link refers to a process of completing a physical layer connection and a data link layer connection that are between the first apparatus and the second apparatus. Specifically, after the first apparatus and the second apparatus complete establishment of the physical layer connection, optical signals of physical layers of the two parties operate in a same waveband or electrical signals of physical layers of the two parties operate at a same frequency, and then the two parties are locked to each other at an agreed frequency. After the first apparatus and the second apparatus complete the data link layer connection, the two parties may send messages to each other, and may correctly parse received messages, and provide parsed content to an upper-layer application.

The foregoing describes a method in which the second apparatus attempts to establish the link with the first apparatus. The first apparatus attempts to establish a link with the second apparatus according to a similar method. Specifically, when performing the foregoing step 201 to step 204, the second apparatus further sends a second cyclic sequence to the first apparatus, where a second cyclic class corresponding to the second cyclic sequence indicates a second transmission rate in the transmission rates supported by the second apparatus, the second cyclic class includes at least one second subsequence, and the second subsequence includes any M consecutive bits in the second cyclic sequence. A value of M is the same as a quantity M of bits included in the first subsequence in the first cyclic sequence. Subsequently, the first apparatus determines a to-be-negotiated transmission rate by using an execution method similar to that of the second apparatus, and then the first apparatus attempts to establish the link with the second apparatus based on the to-be-negotiated transmission rate.

It should be noted that, the first apparatus and the second apparatus need to select, by using a same rule, the transmission rate used for attempting to establish the link. Specifically, if the first transmission rate indicated by the first cyclic sequence sent by the first apparatus to the second apparatus is the smallest transmission rate in the transmission rates supported by the first apparatus, the second transmission rate indicated by the second cyclic sequence sent by the second apparatus to the first apparatus is a smallest transmission rate in the transmission rates supported by the second apparatus. In other words, for rate negotiation, the first apparatus provides the smallest transmission rate in the transmission rates supported by the first apparatus to the second apparatus, and the second apparatus provides the smallest transmission rate in the transmission rates supported by the second apparatus to the first apparatus. Similarly, if the first transmission rate indicated by the first cyclic sequence sent by the first apparatus to the second apparatus is the largest transmission rate in the transmission rates supported by the first apparatus, the second transmission rate indicated by the second cyclic sequence sent by the second apparatus to the first apparatus is a largest transmission rate in the transmission rates supported by the second apparatus. In other words, for rate negotiation, the first apparatus provides the largest transmission rate in the transmission rates supported by the first apparatus to the second apparatus, and the second apparatus provides the largest transmission rate in the transmission rates supported by the second apparatus to the first apparatus.

The following describes the foregoing process of establishing the link with reference to a specific example. In the following examples, an example in which the first apparatus provides the largest transmission rate in the transmission rates supported by the first apparatus to the second apparatus, and the second apparatus provides the largest transmission rate in the transmission rates supported by the second apparatus to the first apparatus is used for description.

### Example 1

The transmission rates supported by the first apparatus are {5, 10, 15}, and the transmission rates supported by the second apparatus are {10, 15, 20}. The first transmission rate indicated by the first cyclic class corresponding to the first cyclic sequence sent by the first apparatus to the second apparatus is 15, and 15 is the largest transmission rate in the transmission rates supported by the first apparatus. Because the transmission rates supported by the second apparatus include the first transmission rate of 15, the second apparatus determines that the to-be-negotiated transmission rate is 15, and then the second apparatus attempts to establish the link with the first apparatus based on the transmission rate of 15. Alternatively, the second transmission rate indicated by the second cyclic class corresponding to the second cyclic sequence sent by the second apparatus to the first apparatus is 20, and 20 is the largest transmission rate in the transmission rates supported by the second apparatus. Because the transmission rates supported by the first apparatus do not include the second transmission rate of 20, the first apparatus determines that the to-be-negotiated transmission rate is 15, that is, determines, as the to-be-negotiated transmission rate, the largest transmission rate in the transmission rates supported by the first apparatus, and then the first apparatus attempts to establish the link with the second apparatus based on the transmission rate of 15. Because the first apparatus and the second apparatus attempt to establish the link by using a same transmission rate, generally, the link may be successfully established. However, in some special cases, for example, the link is unstable, the link may fail to be established.

### Example 2

The transmission rates supported by the first apparatus are {5, 10, 15}, and the transmission rates supported by the second apparatus are {5, 10}. The first transmission rate indicated by the first cyclic class corresponding to the first cyclic sequence sent by the first apparatus to the second apparatus is 15, and 15 is the largest transmission rate in the transmission rates supported by the first apparatus. Because the transmission rates supported by the second apparatus do not include the first transmission rate of 15, the second apparatus determines that the to-be-negotiated transmission rate is 10, that is, determines, as the to-be-negotiated transmission rate, the largest transmission rate in the transmission rates supported by the second apparatus, and then the second apparatus attempts to establish the link with the first apparatus based on the transmission rate of 10. Alternatively, the second transmission rate indicated by the second cyclic class corresponding to the second cyclic sequence sent by the second apparatus to the first apparatus is 10, and 10 is the largest transmission rate in the transmission rates supported by the second apparatus. Because the transmission rates supported by the first apparatus include the second transmission rate of 10, the first apparatus determines that the to-be-negotiated transmission rate is 10, and then the first apparatus attempts to establish the link with the second apparatus based on the transmission rate of 10. Because the first apparatus and the second apparatus attempt to establish the link by using a same transmission rate, generally, the link may be successfully established. However, in some special cases, for example, the link is unstable, the link may fail to be established.

### Example 3

The transmission rates supported by the first apparatus are {5, 10, 15}, and the transmission rates supported by the second apparatus are {5, 10, 20}. The first transmission rate indicated by the first cyclic class corresponding to the first cyclic sequence sent by the first apparatus to the second apparatus is 15, and 15 is the largest transmission rate in the transmission rates supported by the first apparatus. Because the transmission rates supported by the second apparatus do not include the first transmission rate of 15, the second apparatus determines that the to-be-negotiated transmission rate is 20, that is, determines, as the to-be-negotiated transmission rate, the largest transmission rate in the transmission rates supported by the second apparatus, and then the second apparatus attempts to establish the link with the first apparatus based on the transmission rate of 20. Alternatively, the second transmission rate indicated by the second cyclic class corresponding to the second cyclic sequence sent by the second apparatus to the first apparatus is 20, and 20 is the largest transmission rate in the transmission rates supported by the second apparatus. Because the transmission rates supported by the first apparatus do not include the second transmission rate of 20, the first apparatus determines that the to-be-negotiated transmission rate is 15, that is, determines, as the to-be-negotiated transmission rate, the largest transmission rate in the transmission rates supported by the first apparatus, and then the first apparatus attempts to establish the link with the second apparatus based on the transmission rate of 15. Because the first apparatus and the second apparatus attempt to establish the link by using different transmission rates, the link fails to be established.

In an implementation method, when the second apparatus successfully establishes the link with the first apparatus based on the to-be-negotiated transmission rate, the second apparatus determines the to-be-negotiated transmission rate as a transmission rate between the second apparatus and the first apparatus. Similarly, the first apparatus also determines the to-be-negotiated transmission rate as a transmission rate between the second apparatus and the first apparatus. For example, for the foregoing Example 1, if the first apparatus and the second apparatus successfully establish the link, both the first apparatus and the second apparatus determine that the transmission rate between the first apparatus and the second apparatus is 15. For another example, for the foregoing Example 2, if the first apparatus and the second apparatus successfully establish the link, both the first apparatus and the second apparatus determine that the transmission rate between the first apparatus and the second apparatus is 10.

In another implementation method, when the second apparatus fails to establish the link with the first apparatus based on the to-be-negotiated transmission rate, the second apparatus deletes, from the transmission rates supported by the second apparatus, the to-be-negotiated transmission rate determined by the second apparatus, and the first apparatus deletes, from the transmission rates supported by the first apparatus, the to-be-negotiated transmission rate determined by the first apparatus. For example, for the foregoing Example 3, the first apparatus deletes the transmission rate of 15 from the transmission rates supported by the first apparatus, to obtain updated transmission rates supported by the first apparatus as {5, 10}; and the second apparatus deletes the transmission rate of 20 from the transmission rates supported by the second apparatus, to obtain updated transmission rates supported by the second apparatus as {5, 10}. Then, the first apparatus uses the updated transmission rates supported by the first apparatus, and the second apparatus uses the updated transmission rates supported by the second apparatus. The two parties re-perform transmission rate negotiation according to the foregoing method, and may negotiate the transmission rate of 10 as the transmission rate between the first apparatus and the second apparatus.

In still another implementation method, when the second apparatus fails to establish the link with the first apparatus based on the to-be-negotiated transmission rate determined by the second apparatus, after specified duration, the second apparatus re-attempts to establish a link with the first apparatus based on the to-be-negotiated transmission rate determined by the second apparatus. Similarly, when the first apparatus fails to establish the link with the second apparatus based on the to-be-negotiated transmission rate determined by the first apparatus, after specified duration, the first apparatus re-attempts to establish a link with the second apparatus based on the to-be-negotiated transmission rate determined by the first apparatus. For example, for any one of the foregoing Example 1 to Example 3, if the second apparatus fails to attempt to establish the link with the first apparatus, after the specified duration, the second apparatus re-attempts to establish a link based on a determined negotiated transmission rate; and after a specified quantity of attempts, if the link still fails to be established, the second apparatus determines that the transmission rate is unavailable, and may reselect a to-be-negotiated transmission rate according to the foregoing solution, to attempt to establish a link with the first apparatus. For the first apparatus, a similar method is also used for execution. The method can increase a success rate of link establishment. For example, for the foregoing Example 1 and Example 2, the to-be-negotiated transmission rate determined by the first apparatus is the same as the to-be-negotiated transmission rate determined by the second apparatus. Generally, the two parties can successfully establish the link. However, due to some special reasons, for example, an unstable link or external interference, the two parties may fail to establish the link. In this case, if the negotiated transmission rate is directly abandoned, the two parties may miss the transmission rate, resulting in a case in which the two parties need to take more time to successfully establish the link, or the two parties may fail to select a largest same transmission rate to establish the link. However, after the link fails to be established, if the first apparatus and the second apparatus still attempt to establish the link by using the determined to-be-negotiated transmission rate according to the foregoing method, the first apparatus and the second apparatus have a higher probability of successfully establishing the link at the to-be-negotiated transmission rate.

In the foregoing solution, the first apparatus indicates, based on the cyclic sequence, the first transmission rate supported by the first apparatus, so that the second apparatus can accurately determine the first transmission rate, to help improve accuracy of the transmission rate negotiation. In addition, after receiving the first cyclic sequence, the second apparatus does not need to send a response to the first apparatus, but performs a subsequent operation, for example, determines the first transmission rate based on the first cyclic sequence. Because fewer interaction procedures are performed between the two parties, the transmission rate negotiation is accelerated.

In an implementation method, in the foregoing step 201, that the first apparatus sends a first cyclic sequence to the second apparatus is specifically: The first apparatus sends, to the second apparatus, level signals indicating the first cyclic sequence, where a first-type level signal that lasts for first duration and a second-type level signal that lasts for second duration in the level signals indicate first information, and the first information is one bit in the first cyclic sequence. In other words, the first information may include the first-type level signal that lasts for the first duration and the second-type level signal that lasts for the second duration. A first-type level signal that lasts for third duration and a second-type level signal that lasts for fourth duration in the level signals indicate second information. Similarly, the second information may include the first-type level signal that lasts for the third duration and the second-type level signal that lasts for the fourth duration, and the second information is one bit in the first cyclic sequence. The first information is different from the second information.

The first-type level signal is high-level information, and the second-type level signal is a low-level signal or a no-level signal. Alternatively, the first-type level signal is a low-level signal or a no-level signal, and the second-type level signal is a high-level signal.

In an implementation method, the foregoing "level signals" may all be replaced with "optical signals" or another type of signals. This is not limited in this application. In other words, the first information or the second information is indicated by using optical signals that last for different duration.

For example, the first information is 0, and the second information is 1. Alternatively, the first information is 1, and the second information is 0.

The second duration may be the same as or different from the fourth duration. When the second duration is the same as the fourth duration, the first duration is different from the third duration.

Lengths of the first duration, the second duration, the third duration, and the fourth duration are not limited in this embodiment of this application. In an implementation method, a length of a time slice (time slice, TS) may be predefined. For example, a TS is five microseconds (µs), and then that the first duration is equal to a1×TS, that the second duration is equal to a2×TS, that the third duration is equal to a3 ×TS, and that the fourth duration is equal to a4×TS are defined.

Optionally, a1, a2, a3, and a4 are all prime numbers. For example, a1=a2=a4=31, and a3=97. The prime numbers cannot be evenly divided by each other, for example, 97/31=3.129.... Therefore, identification between different signals is increased, and a first-type level signal that lasts for 97 µs is not identified as three first-type level signals that last for 31 µs. Therefore, the method can reduce noise interference and improve accuracy of information identification.

In an implementation method, in an actual application, if a first-type level signal in a first time range is detected, this indicates that the first-type level signal that lasts for the first duration is detected, and the first time range includes the first duration. If a second-type level signal in a second time range is detected, this indicates that the second-type level signal that lasts for the second duration is detected, and the second time range includes the second duration. If a first-type level signal in a third time range is detected, this indicates that the first-type level signal that lasts for the third duration is detected, and the third time range includes the third duration. If a second-type level signal in a fourth time range is detected, this indicates that the second-type level signal that lasts for the fourth duration is detected, and the fourth time range includes the fourth duration. In the foregoing examples, the first duration is equal to a1×TS, the second duration is equal to a2×TS, the third duration is equal to a3×TS, and the fourth duration is equal to a4×TS. It is assumed that a1=a2=a4=31, and a3=97. In this case, the first time range, the second time range, and the fourth time range are the same, and are all 15 µs to 63 µs; and the third time range is 64 µs to 97 µs, where 64=(31+97)/2, and 15=(0+31)/2. Therefore, if a first-type level signal that lasts for 15 µs to 63 µs and a second-type level signal that lasts for 15 µs to 63 µs are detected, this indicates that the first information is detected. If a first-type level signal that lasts for 64 µs to 97 µs and a second-type level signal that lasts for 15 µs to 63 µs are detected, this indicates that the second information is detected. According to the method, a receive end for identifying the signal has very high tolerance for a length of time, that is, a clock of the receive end may be greatly different from a clock of a transmit end. Therefore, the receive end basically has no requirement on the clock of the transmit end. In this way, dependence of the receive end on the clock of the transmit end can be reduced, to help fast and accurate transmission rate negotiation.

The following describes the level signals with reference to an example.

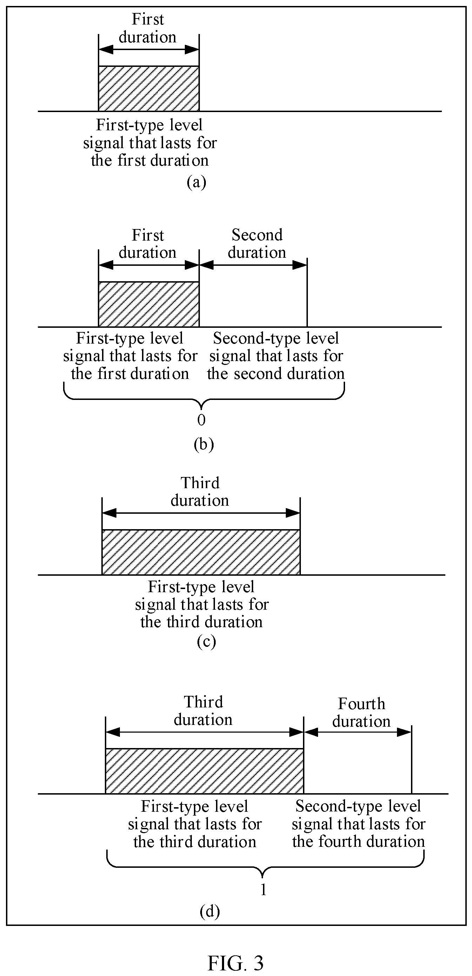

FIG. 3 is a diagram of indicating information by using level signals according to an embodiment of this application. In this example, the first-type level signal is a high-level signal, and the second-type level signal is a no-level signal. As shown in (a) and (c) in FIG. 3, the first-type level signal may last for specific duration, for example, last for the first duration or the third duration. As shown in (b) in FIG. 3, a high-level signal that lasts for the first duration and a low-level signal that lasts for the second duration indicate bit information 0. As shown in (d) in FIG. 3, a high-level signal that lasts for the third duration and a low-level signal that lasts for the fourth duration indicate bit information 1.

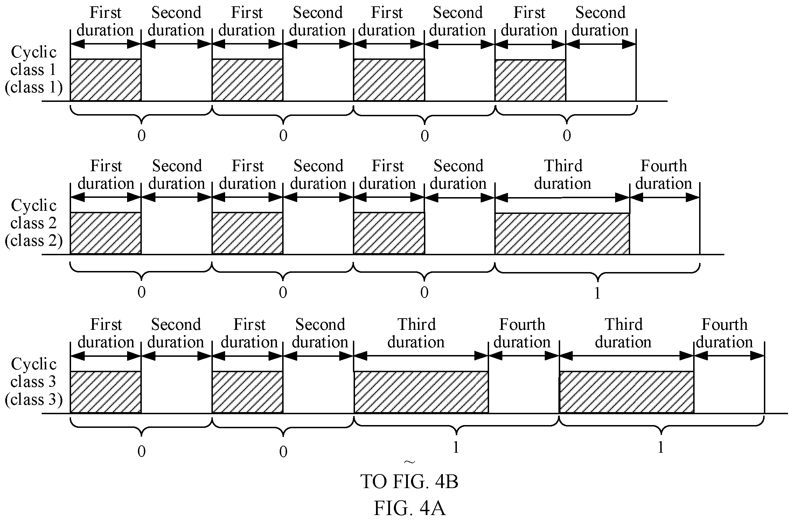

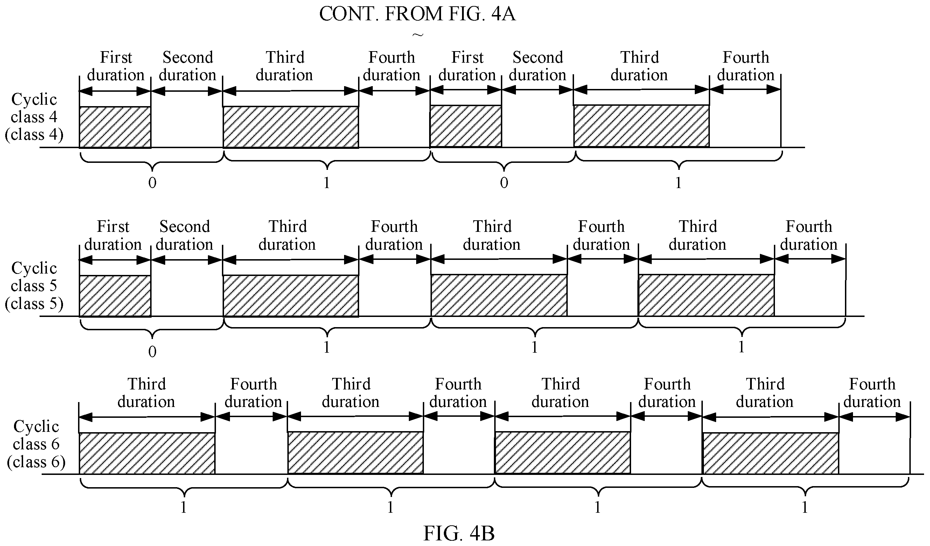

FIG. 4A and FIG. 4B are a diagram of transmission of a cyclic sequence according to an embodiment of this application. For example, M=4, and a manner of sending a cyclic sequence corresponding to each cyclic class is provided. A cyclic class 1 is used as an example. Because a subsequence in the cyclic class 1 is 0000, 0000 may be cyclically sent in the manner shown in FIG. 4A. This indicates that a cyclic sequence corresponding to the cyclic class 1 is sent. A cyclic class 2 is used as an example. Because subsequences in the cyclic class 2 are 0001, 0010, 0100, and 1000, 0001 may be cyclically sent in the manner shown in FIG. 4A. This indicates that a cyclic sequence corresponding to the cyclic class 2 is sent. For sending manners of cyclic classes 3 to 6, refer to the descriptions in FIG. 4A and FIG. 4B. Details are not described again. In the example in FIG. 4A and FIG. 4B, both 0 and 1 are indicated in the manner shown in FIG. 3. In other words, the high-level signal that lasts for the first duration and the low-level signal that lasts for the second duration indicate 0, and the high-level signal that lasts for the third duration and the low-level signal that lasts for the fourth duration indicate 1. In the method, the cyclic sequence is indicated by using different types of level signals. In this way, the transmission rate corresponding to the cyclic sequence can be precisely indicated, to help increase the speed of the transmission rate negotiation and a success rate of the transmission rate negotiation.

The foregoing provides an implementation method for indicating different information by using the different types of level signals. In an actual application, the different information may alternatively be indicated by using another method. For example, the bit information 0 and the bit information 1 may be indicated based on brightness and darkness of laser light emitted by a laser. Alternatively, the bit information 0 and the bit information 1 are indicated based on high and low amplitudes of laser light emitted by a laser. In the method, the bit information is indicated based on the brightness and the darkness or the amplitudes that are of the laser light emitted by the laser. In this way, the method is simple to implement and has high precision, to help increase the speed of the transmission rate negotiation and the success rate of the transmission rate negotiation.

It may be understood that, to implement functions in the foregoing embodiments, the first apparatus or the second apparatus includes corresponding hardware structures and/or software modules for performing the functions. A person skilled in the art should be easily aware that, in this application, units and method steps described in examples with reference to embodiments disclosed in this application can be implemented in a form of hardware or a combination of hardware and computer software. Whether a specific function is performed by hardware or hardware driven by computer software depends on particular application scenarios and design constraints of the technical solutions.

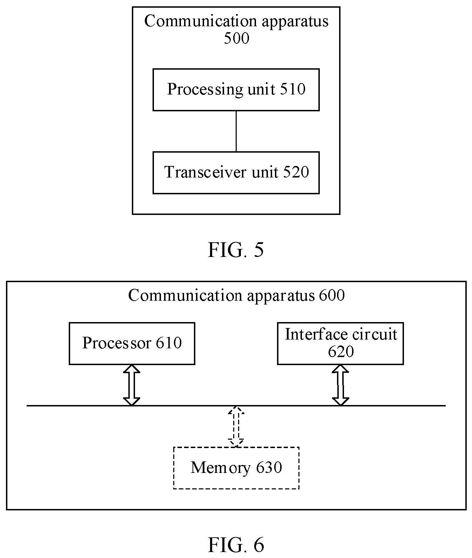

FIG. 5 and FIG. 6 are diagrams of structures of possible communication apparatuses according to embodiments of this application. These communication apparatuses may be configured to implement a function of the first apparatus or a function of the second apparatus in the foregoing method embodiments, and therefore can also achieve beneficial effects of the foregoing method embodiments. In embodiments of this application, the communication apparatus may be the first apparatus or the second apparatus shown in FIG. 1.

The communication apparatus 500 shown in FIG. 5 includes a processing unit 510 and a transceiver unit 520. The communication apparatus 500 is configured to implement a function of the first apparatus or a function of the second apparatus in the foregoing method embodiments.

When the communication apparatus 500 is configured to implement the function of the second apparatus in the foregoing method embodiments, the transceiver unit 520 is configured to: receive a first cyclic sequence from the first apparatus, where a first cyclic class corresponding to the first cyclic sequence indicates a first transmission rate in transmission rates supported by the first apparatus, the first cyclic class includes at least one first subsequence, the first subsequence includes any M consecutive bits in the first cyclic sequence, and M is an integer greater than 1; and the processing unit 510 is configured to: determine the first transmission rate based on the first cyclic sequence; determine a to-be-negotiated transmission rate based on the first transmission rate and transmission rates supported by the second apparatus; and attempt to establish a link with the first apparatus based on the to-be-negotiated transmission rate.

In a possible implementation method, the processing unit 510 is specifically configured to: obtain any M bits in the first cyclic sequence; and determine the first transmission rate based on the first cyclic class to which the M bits belong.

In a possible implementation method, the first transmission rate is a largest transmission rate in the transmission rates supported by the first apparatus; and the processing unit 510 is specifically configured to: when the transmission rates supported by the second apparatus include the first transmission rate, determine the first transmission rate as the to-be-negotiated transmission rate; or when the transmission rates supported by the second apparatus do not include the first transmission rate, determine, as the to-be-negotiated transmission rate, a largest transmission rate in the transmission rates supported by the second apparatus.

In a possible implementation method, the transceiver unit 520 is specifically configured to: receive level signals from the first apparatus, where the level signals indicate the first cyclic sequence, where a first-type level signal that lasts for first duration and a second-type level signal that lasts for second duration in the level signals indicate first information, and a first-type level signal that lasts for third duration and a second-type level signal that lasts for fourth duration in the level signals indicate second information; and the first information is different from the second information, and the first duration is different from the third duration.

In a possible implementation method, the processing unit 510 is specifically configured to: when successfully establishing the link with the first apparatus based on the to-be-negotiated transmission rate, determine the to-be-negotiated transmission rate as a transmission rate between the second apparatus and the first apparatus.

In a possible implementation method, the processing unit 510 is further configured to: when failing to establish the link with the first apparatus based on the to-be-negotiated transmission rate, delete the to-be-negotiated transmission rate from the transmission rates supported by the second apparatus.

In a possible implementation method, the processing unit 510 is specifically configured to: when failing to establish the link with the first apparatus based on the to-be-negotiated transmission rate, after specified duration, re-attempt to establish a link with the first apparatus based on the to-be-negotiated transmission rate.

In a possible implementation method, the transceiver unit 520 is further configured to: send a second cyclic sequence to the first apparatus, where a second cyclic class corresponding to the second cyclic sequence indicates a second transmission rate in the transmission rates supported by the second apparatus, the second cyclic class includes at least one second subsequence, and the second subsequence includes any M consecutive bits in the second cyclic sequence.

In a possible implementation method, the second transmission rate is the largest transmission rate in the transmission rates supported by the second apparatus.

In a possible implementation method, the first apparatus is a BBU, an AAU, or an RRU, and the second apparatus is a BBU, an AAU, or an RRU.

For more detailed descriptions of the processing unit 510 and the transceiver unit 520, directly refer to related descriptions in the foregoing method embodiments. Details are not described herein again.

The communication apparatus 600 shown in FIG. 6 includes a processor 610 and an interface circuit 620. The processor 610 and the interface circuit 620 are coupled to each other. It may be understood that, the interface circuit 620 may be a transceiver or an input/output interface. Optionally, the communication apparatus 600 may further include a memory 630 configured to store instructions executed by the processor 610, store input data required by the processor 610 to run the instructions, or store data generated after the processor 610 runs the instructions.

When the communication apparatus 600 is configured to implement the foregoing method embodiments, the processor 610 is configured to implement a function of the foregoing processing unit 510, and the interface circuit 620 is configured to implement a function of the foregoing transceiver unit 520.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or may be any conventional processor.

Method steps in embodiments of this application may be implemented in a hardware manner, or may be implemented by a processor by executing software instructions. The software instructions may be formed by corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a compact disk read-only memory (compact disk read-only memory, CD-ROM), or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a first apparatus or a second apparatus. Certainly, the processor and the storage medium may alternatively exist in a first apparatus or a second apparatus as discrete components.

All or a part of the foregoing embodiments may be implemented by using software, hardware, firmware, or any combination thereof. When software is used for implementing embodiments, all or a part of embodiments may be implemented in a form of a computer program product. The computer program product includes one or more computer programs or instructions. The computer program (English: Computer Program) is a set of instructions that indicate each step of an electronic computer or another device having a message processing capability, and is usually written in a program design language and runs on a target architecture. When the computer programs or the instructions are loaded and executed on a computer, all or a part of procedures or functions in embodiments of this application are performed. The computer may be a general-purpose computer, a dedicated computer, a computer network, an access network device, a terminal, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, such as a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logical conflict, terms and/or descriptions in different embodiments are consistent and may be mutually referenced. Technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between associated objects. In a formula in this application, the character "/" indicates a "division" relationship between the associated objects.

It may be understood that, various numbers in embodiments of this application are merely used for differentiation for ease of description, but are not used for limiting the scope of embodiments of this application. Sequence numbers of the foregoing processes do not mean an execution sequence. The execution sequence of the processes should be determined based on functions and internal logic of the processes.

## Claims

1. A transmission rate negotiation method, comprising:
receiving a first cyclic sequence from a first apparatus, wherein a first cyclic class corresponding to the first cyclic sequence indicates a first transmission rate in transmission rates supported by the first apparatus, the first cyclic class comprises at least one first subsequence, the first subsequence comprises any M consecutive bits in the first cyclic sequence, and M is an integer greater than 1;
determining the first transmission rate based on the first cyclic sequence;
determining a to-be-negotiated transmission rate based on the first transmission rate and transmission rates supported by a second apparatus; and
attempting to establish a link with the first apparatus based on the to-be-negotiated transmission rate.

2. The method according to claim 1, wherein the determining the first transmission rate based on the first cyclic sequence comprises:
obtaining any M bits in the first cyclic sequence; and
determining the first transmission rate based on the first cyclic class to which the M bits belong.

3. The method according to claim 1 or 2, wherein the first transmission rate is a largest transmission rate in the transmission rates supported by the first apparatus; and
the determining a to-be-negotiated transmission rate based on the first transmission rate and transmission rates supported by a second apparatus comprises:
when the transmission rates supported by the second apparatus comprise the first transmission rate, determining the first transmission rate as the to-be-negotiated transmission rate; or
when the transmission rates supported by the second apparatus do not comprise the first transmission rate, determining, as the to-be-negotiated transmission rate, a largest transmission rate in the transmission rates supported by the second apparatus.

4. The method according to any one of claims 1 to 3, wherein the receiving a first cyclic sequence from a first apparatus comprises:
receiving level signals from the first apparatus, wherein the level signals indicate the first cyclic sequence, wherein
a first-type level signal that lasts for first duration and a second-type level signal that lasts for second duration in the level signals indicate first information, and a first-type level signal that lasts for third duration and a second-type level signal that lasts for fourth duration in the level signals indicate second information; and the first information is different from the second information, and the first duration is different from the third duration.

5. The method according to any one of claims 1 to 4, wherein the attempting to establish a link with the first apparatus based on the to-be-negotiated transmission rate comprises:
when the second apparatus successfully establishes the link with the first apparatus based on the to-be-negotiated transmission rate, determining the to-be-negotiated transmission rate as a transmission rate between the second apparatus and the first apparatus.

6. The method according to any one of claims 1 to 4, wherein the method further comprises:
when the second apparatus fails to establish the link with the first apparatus based on the to-be-negotiated transmission rate, deleting the to-be-negotiated transmission rate from the transmission rates supported by the second apparatus.

7. The method according to any one of claims 1 to 4, wherein the attempting to establish a link with the first apparatus based on the to-be-negotiated transmission rate comprises:
when the second apparatus fails to establish the link with the first apparatus based on the to-be-negotiated transmission rate, after specified duration, re-attempting to establish a link with the first apparatus based on the to-be-negotiated transmission rate.

8. The method according to any one of claims 1 to 7, wherein the method further comprises:
sending a second cyclic sequence to the first apparatus, wherein a second cyclic class corresponding to the second cyclic sequence indicates a second transmission rate in the transmission rates supported by the second apparatus, the second cyclic class comprises at least one second subsequence, and the second subsequence comprises any M consecutive bits in the second cyclic sequence.

9. The method according to claim 8, wherein the second transmission rate is the largest transmission rate in the transmission rates supported by the second apparatus.

10. The method according to any one of claims 1 to 9, wherein the first apparatus is a baseband unit BBU, an adaptive antenna unit AAU, or a remote radio unit RRU, and the second apparatus is a BBU, an AAU, or an RRU.

11. A communication apparatus, comprising:
a transceiver unit, configured to receive a first cyclic sequence from a first apparatus, wherein a first cyclic class corresponding to the first cyclic sequence indicates a first transmission rate in transmission rates supported by the first apparatus, the first cyclic class comprises at least one first subsequence, the first subsequence comprises any M consecutive bits in the first cyclic sequence, and M is an integer greater than 1; and
a processing unit, configured to: determine the first transmission rate based on the first cyclic sequence; determine a to-be-negotiated transmission rate based on the first transmission rate and transmission rates supported by a second apparatus; and attempt to establish a link with the first apparatus based on the to-be-negotiated transmission rate.

12. The apparatus according to claim 11, wherein the processing unit is specifically configured to obtain any M bits in the first cyclic sequence; and determine the first transmission rate based on the first cyclic class to which the M bits belong.

13. The apparatus according to claim 11 or 12, wherein the first transmission rate is a largest transmission rate in the transmission rates supported by the first apparatus; and
the processing unit is specifically configured to: when the transmission rates supported by the second apparatus comprise the first transmission rate, determine the first transmission rate as the to-be-negotiated transmission rate; or when the transmission rates supported by the second apparatus do not comprise the first transmission rate, determine, as the to-be-negotiated transmission rate, a largest transmission rate in the transmission rates supported by the second apparatus.

14. The apparatus according to any one of claims 11 to 13, wherein the transceiver unit is specifically configured to: receive level signals from the first apparatus, wherein the level signals indicate the first cyclic sequence, wherein a first-type level signal that lasts for first duration and a second-type level signal that lasts for second duration in the level signals indicate first information, and a first-type level signal that lasts for third duration and a second-type level signal that lasts for fourth duration in the level signals indicate second information; and the first information is different from the second information, and the first duration is different from the third duration.

15. The apparatus according to any one of claims 11 to 14, wherein the processing unit is specifically configured to: when successfully establishing the link with the first apparatus based on the to-be-negotiated transmission rate, determine the to-be-negotiated transmission rate as a transmission rate between the second apparatus and the first apparatus.

16. The apparatus according to any one of claims 11 to 14, wherein the processing unit is further configured to: when failing to establish the link with the first apparatus based on the to-be-negotiated transmission rate, delete the to-be-negotiated transmission rate from the transmission rates supported by the second apparatus.

17. The apparatus according to any one of claims 11 to 14, wherein the processing unit is specifically configured to: when failing to establish the link with the first apparatus based on the to-be-negotiated transmission rate, after specified duration, re-attempt to establish a link with the first apparatus based on the to-be-negotiated transmission rate.

18. The apparatus according to any one of claims 11 to 17, wherein the transceiver unit is further configured to: send a second cyclic sequence to the first apparatus, wherein a second cyclic class corresponding to the second cyclic sequence indicates a second transmission rate in the transmission rates supported by the second apparatus, the second cyclic class comprises at least one second subsequence, and the second subsequence comprises any M consecutive bits in the second cyclic sequence.

19. The apparatus according to claim 18, wherein the second transmission rate is the largest transmission rate in the transmission rates supported by the second apparatus.

20. The apparatus according to any one of claims 11 to 19, wherein the first apparatus is a baseband unit BBU, an adaptive antenna unit AAU, or a remote radio unit RRU, and the second apparatus is a BBU, an AAU, or an RRU.

21. A communication apparatus, comprising a module configured to perform the method according to any one of claims 1 to 10.

22. A communication apparatus, comprising a processor coupled to a memory, wherein the processor is configured to invoke a program stored in the memory, to perform the method according to any one of claims 1 to 10.

23. A communication apparatus, comprising a processor and a memory, wherein the memory is configured to store computer instructions; and when the communication apparatus runs, the processor executes the computer instructions stored in the memory, to perform the method according to any one of claims 1 to 10.

24. A communication apparatus, comprising a processor and an interface circuit, wherein the processor is configured to: communicate with another apparatus through the interface circuit, and perform the method according to any one of claims 1 to 10.

25. A computer program product, wherein the computer program product comprises a computer program or instructions; and when the computer program or the instructions are run on a processor, the processor is caused to perform the method according to any one of claims 1 to 10.

26. A computer-readable storage medium, wherein the storage medium stores a computer program or instructions; and when the computer program or the instructions are executed by a communication apparatus, the method according to any one of claims 1 to 10 is implemented.

27. A communication system, comprising a second apparatus configured to perform the method according to any one of claims 1 to 10, and a first apparatus configured to send a first cyclic sequence to the second apparatus.
